# EUROPEAN PATENT SPECIFICATION

(11) **EP 1 171 531 B1**
(45) Date of publication and mention of the grant of the patent: **18.06.2003**
(21) Application number: 00976206.3
(22) Date of filing: 11.04.2000
(51) Int. Cl.: C09D 7/00, C08K 9/04

(54) **A MATTING AGENT FOR RADIATION CURING COATINGS**
MATTIERUNGSMITTEL FÜR STRAHLENHÄRTBARE ANSTRICHE
AGENT DE MATITE POUR REVETEMENTS DURCISSABLES PAR RAYONNEMENT

(30) Priority: 13.04.1999 US 129007 P
(43) Date of publication of application: 16.01.2002
(73) Proprietor: Grace GmbH & Co. KG, 67547 Worms (DE)
(72) Inventor: LÜERS, Georg, D-67593 Westhofen (DE); KENT, David, J., D-67227 Frakenthal (DE); PETRY, Volker, 67310 Hettenleidelheim (DE); POSPESCH, Ute, D-67551 Worms (DE)
(74) Representative: UEXKÜLL & STOLBERG
(86) International application number: IB0001752
(87) International publication number: WO01004217

(56) References cited:
- EP-A- 0 442 325
- EP-A- 0 541 359
- WO-A-98/58030

## Description

### Field of Invention

The invention relates to wax-coated, silica-matting agents and their application in the matting of radiation curable systems.

### Background To The Invention

As noted in WO97/08250, radiation curable, e.g., ultraviolet (UV) curable, compositions are used to coat a variety of surfaces. These compositions provide a number of advantages, of which include rapid curing, superior durability, chemical resistance and storage stability. However, they also result in relatively hard, smooth and glossy coatings. As these coatings become more widely used, there are more and more instances where it is preferable to reduce the gloss of these coatings. Reducing this gloss is also known as matting. Matted surfaces provide the finished articles with a more pleasing appearance, as well as hide imperfections at the surface, especially in wood, furniture, and several other applications.

Silica is one example of an additive used to matt glossy surfaces. Silica matting agents are used in both solvent and water based finishes to reduce or control gloss. However, lacquer systems with a low VOC content are becoming more and more important, due to national and international environmental and legislative pressures. Indeed, in some instances the VOC content in coatings is reduced to substantially zero, i.e., these coatings have a substantially 100% solids content. As a result, films prepared from these coatings may shrink by only 5 to 15% upon curing. This low shrinkage prevents conventional silica matting agents from efficiently matting at their conventional levels. For example, silica matting agents which work effectively in lacquer systems in which the film shrinks up to 70% as the film's solvent evaporates, are not able to matt high solids, radiation (EB, UV) curing systems efficiently. Specifically, the film thickness of a UV curable coating is not reduced to a point the silica particles can cause deformations on the film's surface.

In addition, a matting agent's effectiveness in radiation curable coatings is affected by the time necessary for curing the coating. Fast curing compositions are more difficult to matt using conventional agents. Today a wide range of radiation-curable lacquers are available. Most lacquers are based on combinations of acrylate functional prepolymers (oligimers) and monomers, together with photoinitiators in the case of UV curing. The curing time of these systems is dependent on their composition and on the processing environment. Therefore, both the lack of film shrinkage and short curing time in certain radiation curable compositions (fractions of a second) hinders the efficacy of matting agents.

Special techniques such as "dual cure" methods have been used to matt UV curable systems. These techniques involve a two stage (hence "dual") cure process, designed to encourage the formation of a microrough surface, either through improved orientation of the matting agent particles towards the film surface or through surface wrinkling. An example of the former is "Gradient Intensity Cure" process involving a pregelling cure stage followed by a final surface cure stage. These techniques have the disadvantages of requiring specially designed equipment and formulations, as well as being notoriously difficult to control.

Another technique to reduce gloss in these coatings is to use higher levels of matting agents. However, high dosages of silica matting agent increases cost and also has a negative impact on lacquer properties, e.g., rheology or optical properties of the cured film.

The pore volume of the matting agents can be modified to reduce affects on rheology. However, lowering the pore volume of conventional micronized amorphous silica agents results in particles of higher apparent density, which in turn results in fewer particles per unit volume in the lacquer formulation. Because the number of particles have a direct influence on matting efficiency, an amorphous silica matting agent with a low pore volume exhibits a lower matting effect than a matting agent with a higher pore volume of the same particle size distribution.

Coarser or larger particles could also increase the gloss reduction of the cured film. However, increasing the particle size of the micronised product can adversely increase the surface roughness of the lacquer film to an unacceptable degree.

It is also known that with increasing film thickness and using coating compositions having higher cure rates, matting becomes increasingly more difficult. In those situations, matting can be maintained to a certain extent by increasing the amounts of matting agent. Increasing the number of micronized particles, however, dramatically and adversely changes the rheological properties of the lacquer.

In summary, due to the fast curing of UV-systems and the difficulties of matting such systems, it has been a practice to choose a micronized matting agent with a mean particle size which is close to the thickness of the film after it cures. Accordingly, when one is using a particular coating, the matting agent that can be used is one that has a particle size close to the film thickness of the resulting coating.

It is therefore desirable to have a matting agent which is efficient in radiation curable coatings and can be used at relatively low levels so that viscosity of the formulation is not adversely affected. It is also desirable to have a matting agent that is efficient for fast and slow curing systems, thereby offering the user of the matting agent greater flexibility. In other words, it would be desirable to have available a matting agent that produces stable, reproducible low gloss coatings for a variety of coating formulations without the usual problems of unworkable viscosity increases, inconsistent gloss values at varying coating weight and avoids the use of special application techniques to reduce gloss. In addition, it is also desirable that the agent produces a consistent matting effect over a wide range of thicknesses.

### SUMMARY OF THE INVENTION

The aforementioned objects are unexpectedly obtained by employing silica matting agents having a maximum pore volume of 1.4 ml/g and a wax content of at least 15% and maximum of 30 % by weight. The wax preferably has a melting point in the range of 60-120°C, and most preferably in the range of 60-90°C. The matting efficiency of the agent is also affected by the particle size of the invention. The invention has a median particle size in the range of 2.0-12.0 µm, with a preferred range of 2.0-5.0 µm. It is also unexpected that the matting agents having particles sizes in the lower part of above ranges can enhance matting efficiency further without significant adverse affects on the viscosity of the coating composition.

The wax coated silica-matting agents can be used with a variety of radiation curable compositions and can be manufactured by simultaneously melting and milling the wax and silica to the desired particle size. The milling process is preferably carried out in a fluid energy mill with an inlet temperature which is above the melting point of the used wax.

### BRIEF DESCRIPTION OF THE DRAWINGS

Figure 1 illustrates the invention and the influence particle size has on the matting efficiency in a radiation (ultraviolet, i.e., "UV") curable composition compared to another matting agent composition.
Figure 2 illustrates the invention and the influence wax content in the invention has on matting efficiency in a radiation curable composition compared to other matting agents.
Figure 3 illustrates the viscosity of radiation curable compositions containing the invention and comparison matting agents at various coating thicknesses.
Figure 4 illustrates the viscosity of a commercial radiation (UV) curable composition containing the invention and comparison matting agents over extended periods of time. These viscosity measurements over time reflect what is referenced herein as viscosity stability.
Figure 5 illustrates how pore volume in the matting agents of this invention and comparison matting agents influences matting efficiency in a radiation curable composition.
Figure 6 illustrates the matting efficiency of the invention and comparison matting agents in a specific radiation curable composition known as Ebecryl™ 270.
Figure 7 illustrates the matting efficiency of the invention and a comparison matting agent in a specific radiation curable composition known as Laromer PO83F.

### DETAILED DESCRIPTION

The silica used to prepare the invention can be that used to prepare conventional porous silica flatting agents, provided the silica has a pore volume in the range of 0.8 to 1.4 cc/g, preferably 0.9 to 1.2 cc/g. The pore volume referred to herein is determined by nitrogen porosimetry, described later below.

Silica gels are preferred. Hydrogels, xerogels and aerogels are all suitable. The general procedure to prepare inorganic gels is by the acid neutralization of salt solutions of metals or metalloids, which, thereafter upon standing form hydrogels. The hydrogels must then be washed to remove the relatively high concentration of soluble salts. Treatment during this washing stage determines physical properties, such as porosity, of the final product. The techniques for obtaining those properties are known. For example, final gel pore volumes and surface areas are dependent upon the pH and temperature of the wash solution, the rate of wash, the particle size of the hydrogel, and the duration of wash. Generally, pore volume can be limited by shortening the duration of the washing periods. However, the specific washing conditions can vary depending on the particular inorganic hydrogel used, and are not per se critical to the invention, provided that the aforementioned pore volumes are developed in the final gel. As mentioned above, those skilled in the art are familiar with these washing conditions and are readily able to determine suitable washing conditions in which to form the desired pore volumes for use in this invention. For example, silica gels washed at a starting pH of 3-5 at 50-90°C for 5-25 hours form gels (aerogels) having pore volumes in the aforementioned range.

Particularly suitable silicas include hydrogels used to make commercially available silica matting agents such as the Syloid® matting agents from Grace Davison.

Suitable waxes are those known to make wax coated matting agents. Wax is added to matting agents to enhance the matting agent's redispersibility in the event the matting agent settles during storage. Waxes having a melting point in the range of 60-120°C are preferred, with those having a melting temperature in the range of 60-90°C being most preferred. It is also preferable that the wax is an unbranched linear polyolefin and has an average molecular weight of about 1200 and more preferably 1000 or lower. Paraffin waxes are suitable, but other waxes such as polyethylene waxes are also suitable. WO97/03246 discloses specific examples. Other suitable waxes include Fischer-Tropsch wax commercially available as Vestowax™ grades.

The wax-containing matting agent of this invention can be prepared by conventional co-milling processes in which the wax is melted simultaneously with the comminution of the silica to the desired particle size of 2 to 12 microns. Such a process is most effectively carried out in a fluid energy mill or microniser. The operating temperature can then be varied according to the requirements of the wax. The inlet temperature of the air being supplied to the fluid energy mill should at least be high enough to ensure the wax melts within the residence time profile of the milling equipment. The wax is added to the mill so that the final product has a wax content of 15 to 30% by weight, preferably 18 to 22% by weight.

The matting agent of the invention can be used with a variety of radiation curable compositions designed for coating substrates. The coating composition can be those cured by ultraviolet radiation and electron beam radiation. Preferably it also comprises a curing initiator.

Ultraviolet curable compositions generally comprise components containing usaturated groups. Acrylate-containing compounds are typically used. Acrylate-based UV curable compositions generally comprise an acrylate-terminated oligomer combined with a lower molecular weight acrylate monomer, with the latter also referred to as a reactive diluent. Suitable oligimers are those derived from well known isocyanate, or epoxy-containing compounds, as well as those based on polyester, polyether or amino compounds.

The reactive diluent can be polyfunctional or monofunctional. Suitable polyfunctional acrylate reactive diluents include trimethylolpropane triacrylate; pentaerythritol triacrylate, hexanediol diacrylate, tripropyleneglycol diacrylate, and others. Suitable monofunctional acrylates include ethylhexyl acrylate, 2-Hydroxyethyl acrylate, ethoxyethoxyethyl acrylate, isobornyl acrylate, and 2-carboxyethyl acrylate.

It is preferred that the radiation curable component comprises acrylate and the coating composition comprises 2% by weight or less of matting agent component.

The nature of the radiation curable coatings and their applications are known and described in Organic Coatings, Science and Technology, Volume 2, pp 253-272 (1994). As mentioned earlier the compositions that cure at faster rates are more difficult to matt, and in addition to showing superior efficiency in compositions which cure at lower rates, the invention provides relatively efficient matting in those compositions as well. The matting agents are added to the radiation curable compositions using standard techniques.

Further, a preferred embodiment is a coated substrate comprising a substrate and a coating thereon prepared from a composition according to the invention wherein the radiation curable component comprises acrylate and the coating composition comprises 2% by weight or less of matting agent component and the coating has a matting efficiency of about 20 gloss units at 60°.

Moreover, a further preferred embodiment is a coated substrate comprising a substrate and a coating thereon prepared from a composition according to the invention wherein the coating is prepared from an amine-modified polyehter acrylate, the coating is prepared from a composition comprising about 12% by weight matting agent component or less and the coating has a matting efficiency of about 60 gloss units at 60°.

The paragraphs directly following describe the tests and formulations used to evaluate the invention.
A) Nitrogen surface area - pore volume
Nitrogen surface area is determined by standard nitrogen porosimetry adsorption methods of Brunauer, Emmett, and Teller (BET) using a multi point method with an ASAP 2400 apparatus by Micromeritics. The samples are degassed under vacuum @ 100°C for 12h. Surface area is calculated from the volume of nitrogen gas adsorbed at p/p₀ 0.967. This apparatus also provides the pore size distribution from which it is possible to get the pore volume size (D₁₀) for which of the pores are below this pore size. In the same manner, it is possible to get the pore size for which 50% (D₅₀) and 90% (D₉₀) of the pores are below this pore size. Additionally the pore volume (ml/g) for a given range of pore size can be obtained from the desorption curve.
B) Viscosity
Viscosity is measured by a Brookfield RVT DV2 Viscometer of the stock solution or by a Bohlin Rheometer VOR of a formulation to reach 30 units gloss. The formulation is allowed to deaerate for 24h before measurement.
C) Weight median particle size
The weight median particle size or "median particle size" referred to herein is determined with a Malvern Mastersizer using a 100-mm path length lens. This instrument uses the principle of Frauenhoffer diffraction utilizing a low power He/Ne laser. Before measurement the samples were dispersed ultrasonically in water for 10 seconds to form an aqueous suspension. The Malvern Mastersizer measures the weight particle size distribution of the silica. The weight mean particle size (d₅₀) the 10-percentile (d₁₀) and the 98-percentile (d₉₈) are easily obtained from the data generated by the instruments.
D) The carbon content of the coated silicas is determined by a LECO SC44. The carbon present is converted to carbon dioxide at high temperature using the induction furnace. The gas is then detected by an infrared detection system. The wax content (in % w/w) is calculated from the carbon level obtained.
E) Application tests were carried out in a "fast curing" (difficult-to-matt) system based on Laromer PO 83F from BASF, and a "slow" curing (easy-to-matt) system based on Ebecryl 270 from UCB.
The photoinitiators used are benzophenones.
F) Gloss
Gloss and the matting effect inferred from using the invention was measured by DIN 67530
G) Coating Formulations

| **Laromer™ PO 83F (BASF):** | | |
|---|---|---|
| **Compound** | | **Quantity** |
| 1. Laromer PO 83F (amine modified polyether acrytate) | | 85.5 g |
| 2. Irgacure™ **500** | | 04.5 g |
| 3. Matting Agent | | 10.0 g |
| Dispersed at 2000 rpm / 5 min; applied with 24µm K-Bar | | |
| Curing: | Line speed 10m/min; Mercury lamp 120W; single pass | |

| **Ebecryl™ 270 (UCB):** | | |
|---|---|---|
| **Compound** | | **Quantity** |
| 1. Ebecryl **270** (urethane acrylate) | | 55.2 g |
| 2. Tripropyleneglycol diacrylate (TPGDA) crosslinkers | | 128.8 g |
| ⇒ 5 min mixing @ 2000 rpm | | |
| 3. Benzophenon | | 7.36 g |
| 4. Irgacure **651** initiator | | 3.68 g |
| 5. Matting Agent | | 8.0 g |
| Dispersed at 2000 rpm / 5 min; applied with 24µm K-Bar | | |
| Curing: | line speed 5m/min; Mercury lamp 120W; single pass | |

The stock suspension was prepared by dispersing matting agent in the ready to use lacquer with a Dispermat VMA by Getzmann @ 2000 rpm for 10 minutes.

Matting curves are made by diluting the stock suspension to achieve 5 different matting agent concentrations. The matted lacquer is drawn down with a 25 µm K-Bar on coated test cards (Schwegmann).

### Examples

Samples of wax-containing matting agents were prepared with an AFG 400 fluidized mill and an air inlet temperature of 190°C. The classifier speed and feed rate were set to achieve the appropriate particle size of the coated mirconised product.

Wax coated silica having the following characteristics were produced. The abbreviations appearing in the Tables below are defined as follows:
APS - weight median particle size
PV - pore volume
SA - surface area
PE - polyethylene
COMP - comparison

**Table 1**

| **Matting Agent** | **PV [ml/g]** | **SA [m**^{**2**}**/g]** | **APS [µm]** | **Wax Type** | **Wax Content** |
|---|---|---|---|---|---|
| INVENTION | 1.10 | 380 | 3.70 | Fischer-Tropsch | 20% |
| COMP 1 | 1.01 | 380 | 7.12 | Fischer-Tropsch | 10% |
| COMP 2 | 2.1 | 270 | 3.29 | Fischer-Tropsch | 20% |
| COMP 3 | 1.8 | 285 | 7.9 | PE wax | 12% |

The matting agents described in Table 1, as well as a matting agent commercially available as Syloid® ED30, were formulated into two coating formulations. The properties of the formulations, along with matting agent properties are reported in Tables 2 and 3 below.
**1. Matting Results in Ebecryl 270 (UCB):**

**Table 2**

| **Matting Agent** | **APS [µm]** | **PV [ml/g]** | **Wax Content** | **Rel. Viscosity of 8% Suspension** | **Matting efficiency @ 30 Gloss Units** |
|---|---|---|---|---|---|
| INVENTION | 3.70 | 1.10 | 20 | 1.52 | 0.54 |
| COMP 1 | 7.12 | 1.10 | 10 | 2.50 | 1.26 |
| COMP 2 | 3.29 | 2.1 | 20 | 1.55 | 0.84 |
| COMP 3 | 7.9 | 1.8 | 12 | 3.37 | 1.00 |
| SYLOID® ED30 | 6.5 | 1.8 | 10 | 4.41 | 1.06 |

**2. Matting Results in Laromer PO 83F (BASF):**

**Table 3**

| **Matting Agent** | **APS [µm]** | **PV [ml/g]** | **Wax Content** | **Rel. Viscosity of 10% Suspension** | **Matting @ 60° of 10% Suspension** |
|---|---|---|---|---|---|
| INVENTION | 3.7 | 1.10 | 20 | 8.47 | 69 |
| COMP 1 | 7.12 | 1.10 | 10 | 4.21 | 75 |
| COMP 2 | 3.29 | 2.1 | 20 | 9.24 | 71 |
| COMP 3 | 7.9 | 1.8 | 12 | 19.39 | 73 |
| SYLOID® ED30 | 6.5 | 1.8 | 10 | 27.27 | 80 |

The results in Table 2 indicate that when particle size and wax content are kept relatively constant, a matting agent having a pore volume in the range of the invention has better matting efficiency than a matting agent having a pore volume outside the range of the invention, e.g., 2.1 ml/g. Compare the invention with COMP2. This is also illustrated in Table 3 which shows matting and viscosity results from matting agents in the fast curing (difficult-to-matt) system containing Laromer PO 83F. Compare the invention with COMP2 in Table 3

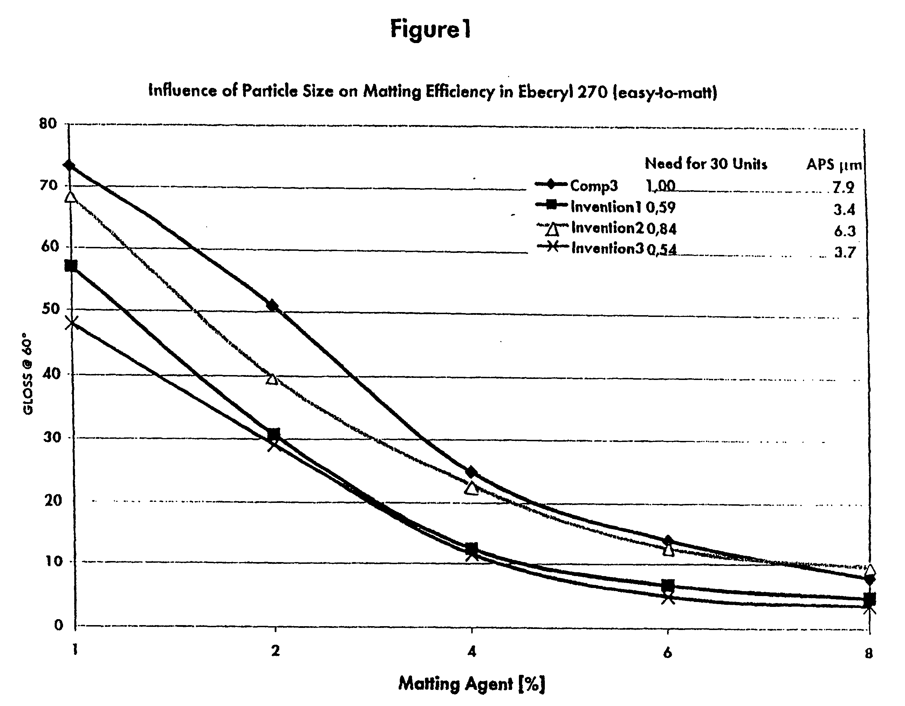

It has also be unexpectedly found that matting efficiency is enhanced when using matting agents having a smaller APS at the lower end of the particle size range claimed for this invention. See Figure 1, and compare COMP3 (having an APS of 7.9 µm, PV of 1.85 ml/g and Wax content of 12%) and Invention 2 (APS=6.3 µm, PV=1.01 ml/g, and Wax content of 20%) with Invention 1 (APS=3.4 µm, PV=1.01 ml/g, and Wax content of 20%) and Invention 3 (APS=3.7 µm, PV=1.01 ml/g, and Wax content of 20%).

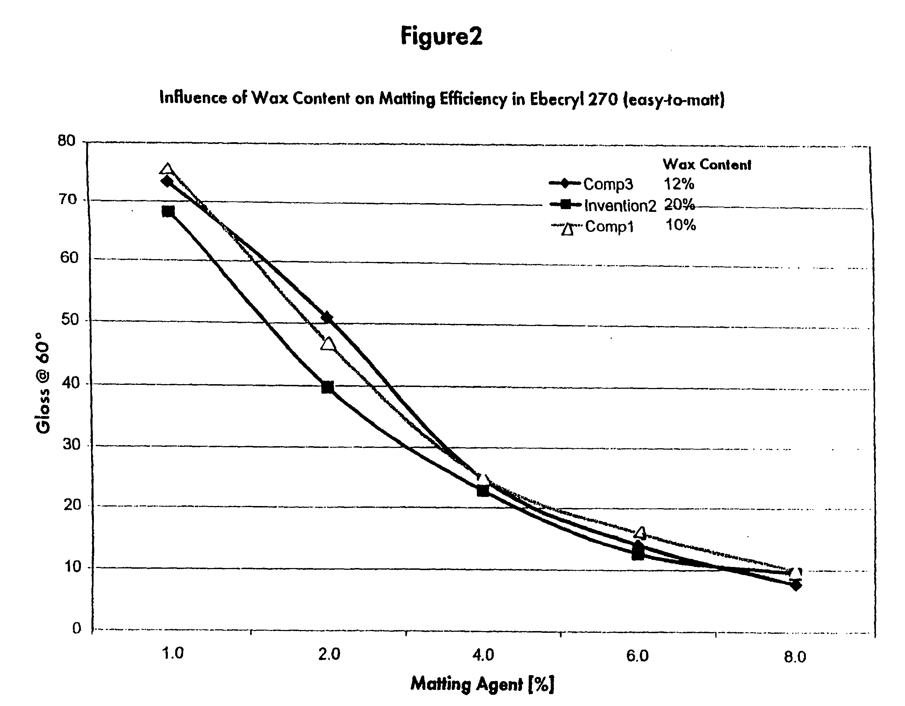

Figure 2 shows that wax contents greater than 15% and preferably 20%, increases the gloss reduction of the cured film compared to conventional matting agents having wax contents less than 15% by weight. COMP 1 and COMP3 are defined earlier and Invention 2 comprising 20% by weight wax is defined above.

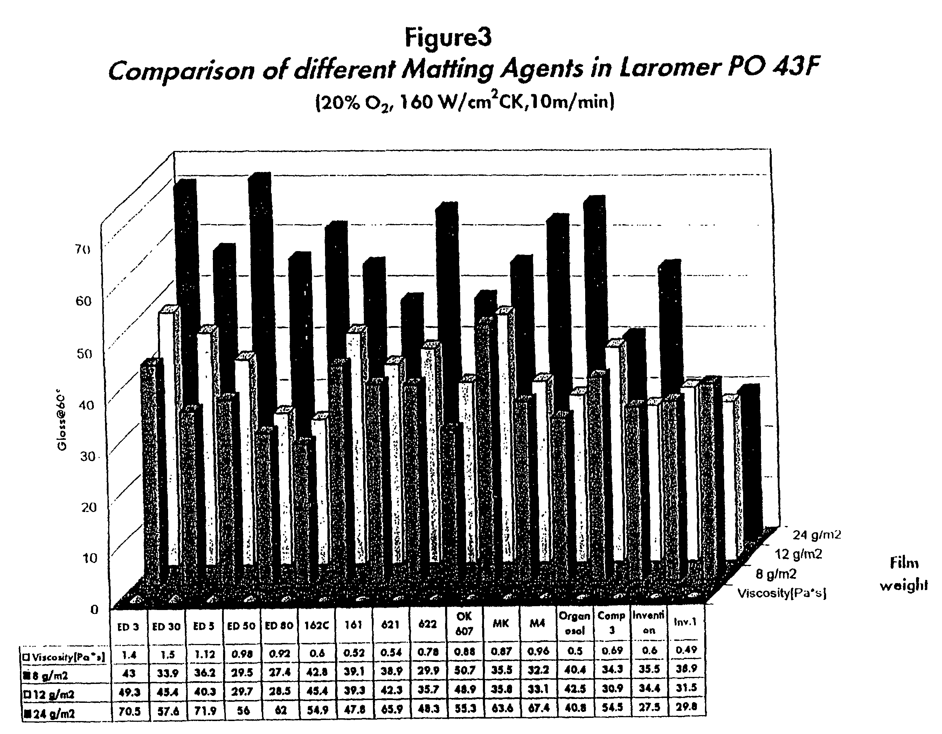

Figure 3 shows an unexpected effect that gloss is independent of film weight and that the invention can reduce gloss with increasing film weight. The first thirteen (13) samples from left to right in Figure 3 are commercially available matting agents. COMP3 and Invention 1 are defined above. The sample labelled Invention is defined in Tables 2 and 3 also above.

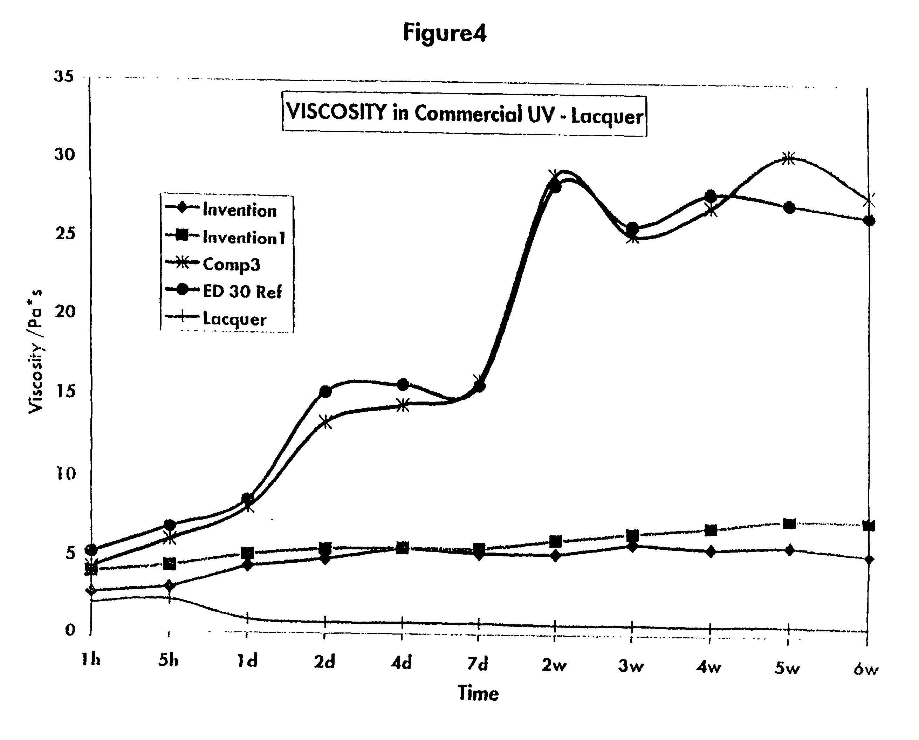

Figure 4 shows that coating compositions according to the invention have lower viscosity and that the viscosity is more stable over time compared to conventional matting agents. Without being held to any particular theory, it is believed that this effect is caused by the lower PV, higher SA and therefore better wax coating of the particles. This avoids particle interactions and increases the relative internal porosity. It is believed that the same reasons are responsible for the increased gloss stability of the new silica matting agent. Viscosity stability enables the lacquer formulator to use the lacquer after 24 h without further gloss fluctuations.

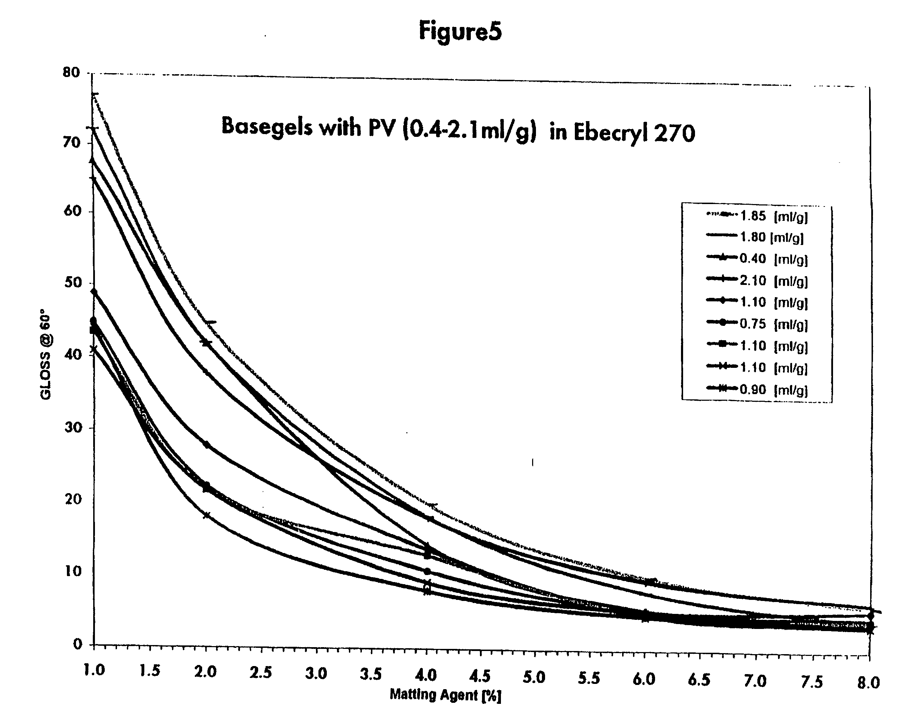

Figure 5 shows that matting agents having pore volumes according to the invention provide more efficient matting.

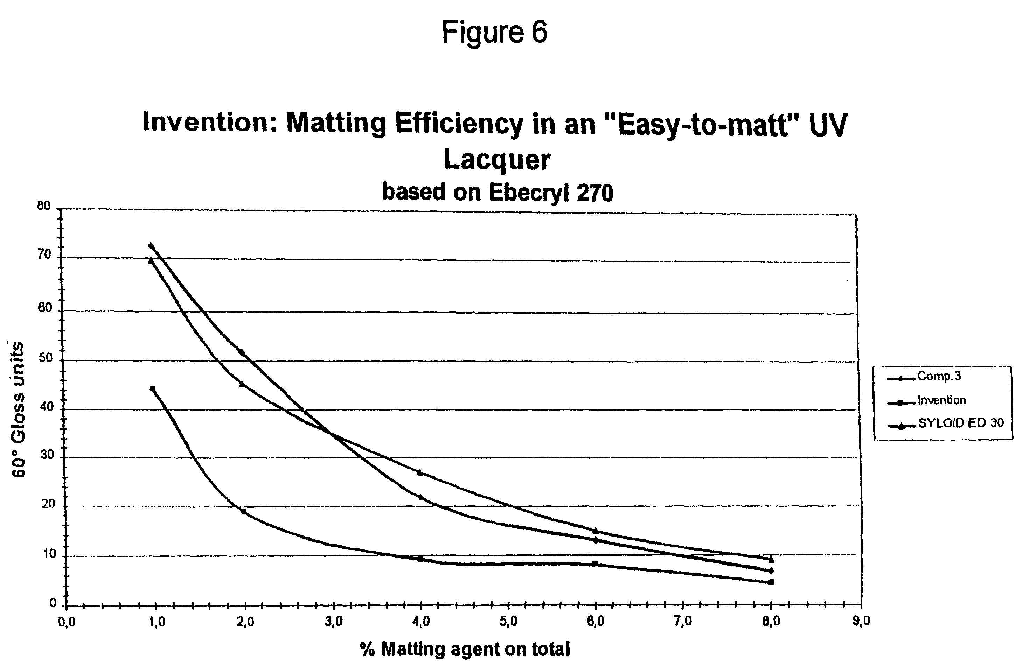

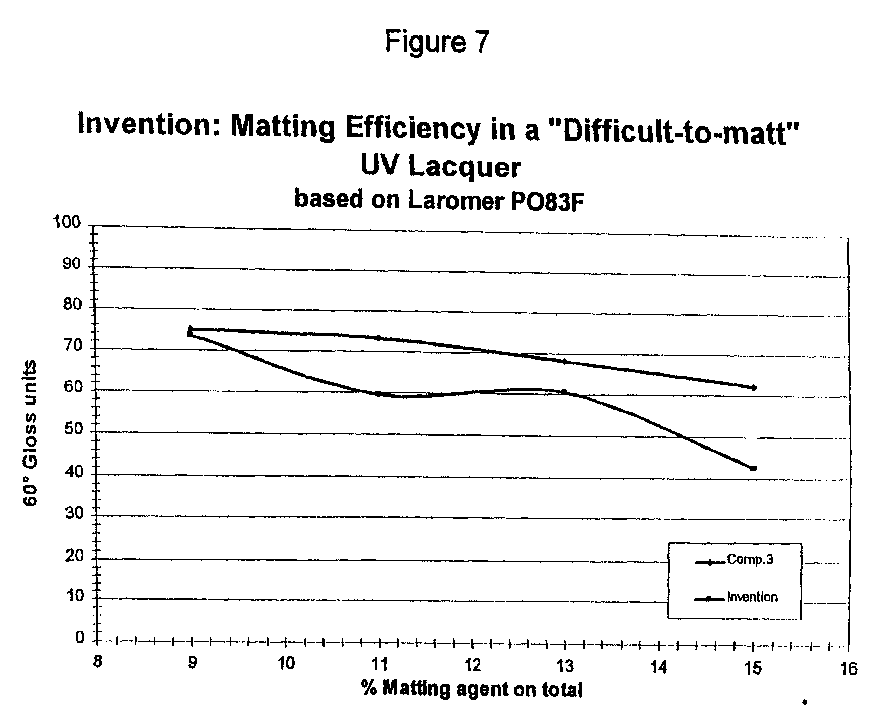

Figures 6 and 7 illustrate the matting efficiency of matting agents according to this invention in the two acrylate compositions illustrated above compared to conventional prior art matting agents.

## Claims

1. A matting agent composition comprising silica and wax wherein the composition has a median particle size in the range of 2-12 microns, a wax content in the range of 15 to 30% by weight of the total composition and the silica has a pore volume in the range of 0.8 to 1.4 cc/g.

2. A matting agent composition according to claim 1 wherein the wax content is 18-22% by weight.

3. A matting agent composition according to claim 1 wherein the wax has a melting point in the range of 60-120°C.

4. A matting agent composition according to claim 1 wherein the wax has a melting point in the range of 60-90°C.

5. A matting agent composition according to claim 3 wherein the wax is paraffin and has a melting point in the range of 60-90°C.

6. A matting agent composition according to claim 1 wherein the median particle size of the composition is 2 to 5 microns.

7. A matting agent composition according to claim 2 wherein the median particle size of the composition is 2 to 5 microns.

8. A matting agent composition according to claim 1 wherein the silica has a pore volume in the range of 0.9 to 1.2 cc/g.

9. A matting agent composition according to claim 2 wherein the silica has a pore volume in the range of 0.9 to 1.2 cc/g.

10. A matting agent composition according to claim 7 wherein the silica has a pore volume in the range of 0.9 to 1.2 cc/g.

11. A coating composition comprising a radiation curable component and a matting agent component according to any one of claims 1-10.

12. A coating composition according to claim 11 wherein the radiation curable component comprises acrylates.

13. A coating composition according to claim 11 wherein the radiation curable component is curable by exposure to ultraviolet radiation.

14. A coating composition according to claim 11 wherein the radiation curable component is curable by electron beam radiation.

15. A coating composition according to claim 13 or 14 further comprising a curing initiator.

16. A coating composition according to claim 13 wherein the radiation curable component comprises acrylate and the coating composition comprises 2% by weight or less of matting agent component.

17. A coated substrate comprising a substrate and a coating thereon prepared from a composition according to any one of claims 11-16.

18. A coated substrate according to claim 17 wherein the coating is prepared from the coating of claim 16 and the coating has a matting efficiency of about 20 gloss units at 60°.

19. A coated substrate according to claim 17 wherein the coating is prepared from an amine-modified polyether acrylate, the coating is prepared from a composition comprising about 12% by weight matting agent component or less and the coating has a matting efficiency of about 60 gloss units or less at 60°.

## Patentansprüche

1. Mattierungsmittelzusammensetzung, die Siliciumdioxid und Wachs umfasst, wobei die Zusammensetzung eine medienteilchengröße im Bereich von 2 bis 12 µm, einen Wachsgehalt im Bereich von 15 bis 30 Gew.-% der Gesamtzusammensetzung aufweist und das Siliciumdioxid ein Porenvolumen im Bereich von 0,8 bis 1,4 cm³/g aufweist.

2. Mattierungsmittelzusammensetzung nach Anspruch 1, bei der der Wachsgehalt von 18 bis 22 Gew.-% beträgt.

3. Mattierungsmittelzusammensetzung nach Anspruch 1, bei der das Wachs einen Schmelzpunkt im Bereich von 60 bis 120°C aufweist.

4. Mattierungsmittelzusammensetzung nach Anspruch 1, bei der das Wachs einen Schmelzpunkt im Bereich von 60 bis 90°C aufweist.

5. Mattierungsmittelzusammensetzung nach Anspruch 3, bei der das Wachs Paraffin ist und einen Schmelzpunkt im Bereich von 60 bis 90°C aufweist.

6. Mattierungsmittelzusammensetzung nach Anspruch 1, bei der die medienteilchengröße der Zusammensetzung von 2 bis 5 µm beträgt.

7. Mattierungsmittelzusammensetzung nach Anspruch 2, bei der die medienteilchengröße der Zusammensetzung von 2 bis 5 µm beträgt.

8. Mattierungsmittelzusammensetzung nach Anspruch 1, bei der das Siliciumdioxid ein Porenvolumen im Bereich von 0,9 bis 1,2 cm³/g aufweist.

9. Mattierungsmittelzusammensetzung nach Anspruch 2, bei der das Siliciumdioxid ein Porenvolumen im Bereich von 0,9 bis 1,2 cm³/g aufweist.

10. Mattierungsmittelzusammensetzung nach Anspruch 7, bei der das Siliciumdioxid ein Porenvolumen im Bereich von 0,9 bis 1,2 cm³/g auf weist.

11. Beschichtungszusammensetzung, die eine durch Strahlung härtbare Komponente und eine Mattierungsmittelkomponente gemäß einem der Ansprüche 1 bis 10 umfasst.

12. Beschichtungszusammensetzung nach Anspruch 11, bei der die durch Strahlung härtbare Komponente Acrylate umfasst.

13. Beschichtungszusammensetzung nach Anspruch 11, bei der die durch Strahlung härtbare Komponente durch Aussetzen gegenüber ultravioletter Strahlung härtbar ist.

14. Beschichtungszusammensetzung nach Anspruch 11, bei der die durch Strahlung härtbare Komponente durch Elektronenstrahlstrahlung härtbar ist.

15. Beschichtungszusammensetzung nach Anspruch 13 oder 14, die ferner einen Härtungsinitiator umfasst.

16. Beschichtungszusammensetzung nach Anspruch 13, bei der die durch Strahlung härtbare Komponente Acrylat umfasst und die Beschichtungszusammensetzung 2 Gew.-% oder weniger an Mattierungsmittelkomponente umfasst.

17. Beschichtetes Substrat, das ein Substrat und eine aus einer Zusammensetzung gemäß einem der Ansprüche 11 bis 16 hergestellte Beschichtung darauf umfasst.

18. Beschichtetes Substrat nach Anspruch 17, bei dem die Beschichtung aus der Beschichtung gemäß Anspruch 16 hergestellt ist und die Beschichtung eine Mattierungswirksamkeit von etwa 20 Glanzeinheiten bei 60° umfasst.

19. Beschichtetes Substrat nach Anspruch 17, bei dem die Beschichtung aus einem Amin-modifizierten Polyetheracrylat hergestellt ist, die Beschichtung aus einer Zusammensetzung, die etwa 12 Gew.-% Mattierungsmittelkomponente oder weniger umfasst, hergestellt ist und die Beschichtung eine Mattierungswirksamkeit von etwa 60 Glanzeinheiten oder weniger bei 60° aufweist.

## Revendications

1. Composition d'agent de matité comprenant de la silice et une cire, dans laquelle la composition présente une taille particulaire moyenne dans la gamme de 2 à 12 microns, une teneur en cire dans la gamme de 15 à 30 % en poids de la composition totale et la silice a un volume des pores dans la gamme de 0,8 à 1,4 cm³/g.

2. Composition d'agent de matité selon la revendication 1, dans laquelle la teneur en cire est de 18 à 22 % en poids.

3. Composition d'agent de matité selon la revendication 1, dans laquelle la cire a un point de fusion dans la gamme de 60 à 120° C.

4. Composition d'agent de matité selon la revendication 1, dans laquelle la cire a un point de fusion dans la gamme de 60 à 90° C.

5. Composition d'agent de matité selon la revendication 3, dans laquelle la cire est de la paraffine et a un point de fusion dans la gamme de 60 à 90° C.

6. Composition d'agent de matité selon la revendication 1, dans laquelle la taille particulaire moyenne de la composition est de 2 à 5 microns.

7. Composition d'agent de matité selon la revendication 2, dans laquelle la taille particulaire moyenne de la composition est de 2 à 5 microns.

8. Composition d'agent de matité selon la revendication 1, dans laquelle la silice a un volume des pores dans la gamme de 0,9 à 1,2 cm³/g.

9. Composition d'agent de matité selon la revendication 2, dans laquelle la silice a un volume des pores dans la gamme de 0,9 à 1,2 cm³/g.

10. Composition d'agent de matité selon la revendication 7, dans laquelle la silice a un volume des pores dans la gamme de 0,9 à 1,2 cm³/g.

11. Composition de revêtement comprenant un composé durcissable par rayonnement et un composé agent de matité selon l'une quelconque des revendications 1 à 10.

12. Composition de revêtement selon la revendication 11, dans laquelle le composé durcissable par rayonnement comprend des acrylates.

13. Composition de revêtement selon la revendication 11, dans laquelle le composé durcissable par rayonnement est durcissable par exposition au rayonnement ultraviolet.

14. Composition de revêtement selon la revendication 11, dans laquelle le composé durcissable par rayonnement est durcissable par rayonnement par faisceau d'électrons.

15. Composition de revêtement selon la revendication 13 ou 14, comprenant en outre un initiateur de durcissement.

16. Composition de revêtement selon la revendication 13, dans laquelle le composé durcissable par rayonnement comprend de l'acrylate et la composition de revêtement comprend 2 % en poids ou moins du composé d'agent de matité.

17. Substrat revêtu comprenant un substrat et un revêtement sur celui-ci préparé à partir d'une composition selon l'une quelconque des revendications 11 à 16.

18. Substrat revêtu selon la revendication 17, dans lequel le revêtement est préparé à partir du revêtement de la revendication 16 et le revêtement a une efficacité de matage d'environ 20 unités de brillant à 60°.

19. Substrat revêtu selon la revendication 17, dans lequel le revêtement est préparé à partir d'un polyéther acrylate modifié par amine, le revêtement est préparé à partir d'une composition comprenant environ 12 % en poids du composant agent de matité ou moins et le revêtement a une efficacité de matité d'environ 60 unités de brillant ou moins à 60°.
